# EUROPÄISCHE PATENTANMELDUNG

(11) **EP 0 764 762 A1**
(43) Veröffentlichungstag der Anmeldung: **26.03.1997**
(21) Anmeldenummer: 95114780.0
(22) Anmeldetag: 20.09.1995
(51) Int. Cl.: F01B 31/16, F01D 25/30

(54) **Vorrichtung zur Schalldämmung**

(71) Anmelder: Balcke-Dürr GmbH, 40882 Ratingen (DE)
(72) Erfinder: Trage, Burkhard, 40882 Ratingen (DE); Leitz, Richard, 40721 Hilden (DE)
(74) Vertreter: Stenger, Watzke & Ring Patentanwälte

(57) **Zusammenfassung**

Die Erfindung betrifft eine Vorrichtung zur Schalldämmung des im Bereich der Dampfturbine eines Kraftwerkes erzeugten und über den Dampf und die zum Luftkondensator führende Abdampfleitung (1) ausgetragenen Geräusches durch einen in die Abdampfleitung (1) eingebauten Schalldämpfer (5) aus korrosionsbeständigem Material.

## Beschreibung

Die Erfindung betrifft eine Vorrichtung zur Schalldämmung des im Bereich der Dampfturbine eines Kraftwerkes erzeugten und über den Dampf und die zum Luftkondensator führende Abdampfleitung ausgetragenen Geräusches.

Bei luftgekühlten Kondensationsanlagen von Kraftwerken wird das im Bereich der Dampfturbine erzeugte Geräusch über den Dampf und die Dampfleitung nach außen bis zum Kondensator getragen. Sofern keine besonderen Anforderungen an die Geräuschdämmung gestellt und normale Ventilatoren verwendet werden, ist die von den Ventilatoren der luftgekühlten Kondensationsanlage erzeugte Schalleistung so hoch, daß das im Bereich der Dampfturbine erzeugte und über den Dampf sowie die zum Luftkondensator führende Abdampfleitung ausgetragene Geräusch unberücksichtigt bleiben kann. Werden jedoch hohe Anforderungen an die Schalldämmung des Luftkondensators gestellt, muß auch das über den Dampf und die zum Luftkondensator führende Abdampfleitung ausgetragene, im Bereich der Dampfturbine erzeugte Geräusch gedämmt werden.

Neben der nur mit einem hohen Kostenaufwand möglichen Schallisolierung der Dampfleitung bis zur eigentlichen Kondensationsanlage besteht die Möglichkeit, die luftgekühlte Kondensationsanlage insgesamt mit Schallkulissen zu umgeben und die Abdampfleitung innerhalb dieser Schallkulissen zu führen. Diese Art der Schalldämmung erfordert jedoch nicht nur einen besonderen Kostenaufwand für die Errichtung der die Kondensationsanlage einhausenden Schallkulissen, sondern einen durch die Schallkulissen bedingten, erhöhten Leistungsbedarf für die Ventilatoren.

Der Erfindung liegt die **Aufgabe** zugrunde, insbesondere bei Luftkondensatoren mit hohen Auflagen bezüglich der Schallemission eine kostengünstige Schalldämmung des im Bereich der Turbine bzw. bei Ausfall der Turbine in einer diese umgehenden Bypass-Leitung erzeugten Schalles zu schaffen, vorzugsweise wenn durch Verwendung spezieller schallarmer Ventilatoren eine Einhausung des Luftkondensators durch Schallkulissen nicht erforderlich ist.

Die **Lösung** dieser Aufgabenstellung durch die Erfindung ist dadurch gekennzeichnet, daß in die Abdampfleitung ein Schalldämpfer aus korrosionsbeständigem Material eingebaut ist.

Mit diesem erfindungsgemäßen Vorschlag wird der Vorteil erreicht, daß der im Turbinenbereich entstehende Schall durch den unmittelbar in der Abdampfleitung angeordneten Schalldämpfer gedämpft wird, so daß durch die Abdampfleitung kein unzulässig hoher Schall über den Luftkondensator ausgetragen werden kann. Damit entfallen spezielle Schalldämmungsmaßnahmen durch Einhausen des Luftkondensators, die nicht nur zusätzliche Anlagekosten verursachen, sondern durch das Entstehen zusätzlicher Druckverluste einen konstant höheren Leistungsbedarf bei den Ventilatoren zur Folge haben.

Gemäß einem weiteren Merkmal der Erfindung ist der Schalldämpfer in einem im Leitungsquerschnitt erweiterten Abschnitt der Abdampfleitung angeordnet, so daß sich nur ein sehr geringer zusätzlicher Druckverlust durch den Einbau des Schalldämpfers in die Abdampfleitung ergibt.

Erfindungsgemäß ist der Schalldämpfer durch mindestens eine Reihe parallel und im Abstand zueinander zwischen gegenüberliegenden Leitungswänden verlaufender Kulissenscheiben gebildet, die jeweils aus parallel zur Strömungsrichtung des Dampfes verlaufenden Lochblechen und diese an- und abströmseitig verbindenden Kopfstücken bestehen und mit Dämmaterial gefüllt sind. Diese erfindungsgemäße Ausgestaltung ergibt einerseits eine konstruktiv einfache und andererseits eine schalltechnisch wirkungsvolle Konstruktion, wobei die Kopfstücke gemäß einem weiteren Merkmal der Erfindung ungelocht sind.

Mit der Erfindung wird schließlich vorgeschlagen, die Schallkulissen mit Edelstahl-Drahtgewebe als Dämmaterial zu füllen. Hierdurch werden nicht nur Korrosionen des Dämmaterials verhindert; es wird auch ausgeschlossen, daß Dämmaterial aus den Kulissenscheiben ausgetragen wird, was beispielsweise bei der Verwendung der üblichen Steinwolle als Dämmaterial zu Verunreinigungen des Wasser-Dampf-Kreislaufes führen würde.

Auf der Zeichnung ist ein Ausführungsbeispiel der Erfindung dargestellt, und zwar zeigen:
- Figur 1: eine perspektivische Ansicht eines mit Schallkulissen versehenen Abschnittes einer Abdampfleitung und
- Figur 2: einen Querschnitt durch eine Kulissenscheibe.

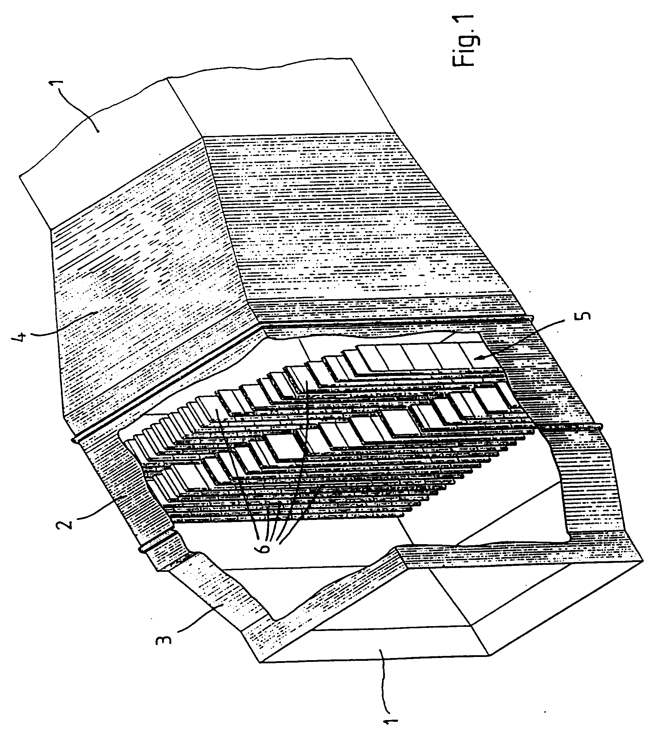

Die perspektivische Darstellung in Figur 1 zeigt einen Teil einer Abdampfleitung 1 mit rechteckigem Querschnitt, die von einer nicht dargestellten Dampfturbine eines Kraftwerkes zu einem ebenfalls nicht dargestellten Luftkondensator führt. Durch eine derartige Abdampfleitung 1 wird einerseits über den in der Abdampfleitung 1 strömenden Dampf und andererseits über das Material der Abdampfleitung 1 das im Bereich der Turbine entstehende Geräusch zum Luftkondensator hin ausgetragen.

Um dieses Geräusch, das insbesondere bei geräuscharmen Ventilatoren des Luftkondensators einen erheblichen Anteil an der Geräuschemission hat, zu dämpfen, ist in der Abdampfleitung 1 ein im Leitungsquerschnitt erweiterter Abschnitt 2 angeordnet, der durch Übergangsabschnitte 3 und 4 in die Abdampfleitung 1 eingeschaltet ist.

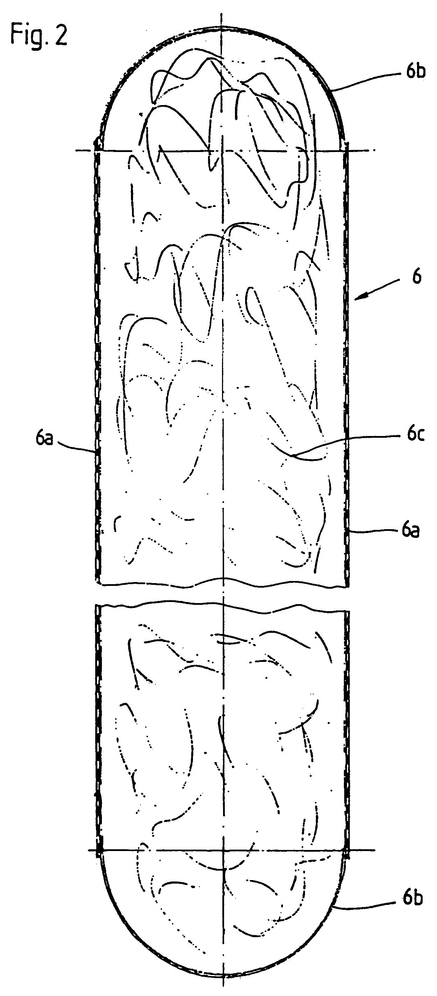

In diesem Abschnitt 2 ist ein Schalldämpfer 5 angeordnet, der beim Ausführungsbeispiel aus zwei in Strömungsrichtung des Dampfes hintereinanderliegenden Reihen von parallel und im Abstand zueinander zwischen gegenüberliegenden Leitungswänden verlaufenden Kulissenscheiben 6 gebildet ist. Eine dieser Kulissenscheiben 6 ist in einem waagerechten Schnitt in Figur 2 dargestellt.

Wie diese Darstellung zeigt, besteht jede Kulissenscheibe 6 aus parallel zur Strömungsrichtung des Dampfes verlaufenden Lochblechen 6a und zwei ungelochten Kopfstücken 6b, welche die Lochbleche 6a an der Anströmseite bzw. der Abströmseite miteinander verbinden. Die Kulissenscheiben 6 sind mit einem Dämmaterial 6c gefüllt, das beim Ausführungsbeispiel aus Edelstahl-Drahtgewebe besteht.

Durch die im erweiterten Abschnitt 2 der Abdampfleitung 1 angeordneten Kulissenscheiben 6 wird der im Bereich der Turbine entstehende Schall vor seiner Ausbreitung durch die Abdampfleitung 1 zum Luftkondensator derart gedämpft, daß der Anteil des im Luftkondensator ankommenden Geräusches selbst bei geräuscharmen Ventilatoren vernachlässigbar klein ist. Da der aus mindestens einer Reihe von Kulissenscheiben 6 bestehende Schalldämpfer 5 in einem Abschnitt 2 der Abdampfleitung 1 angeordnet ist, der gegenüber dem Querschnitt der Abdampfleitung 1 einen vergrößerten Strömungsquerschnitt hat, entstehen nur geringe Strömungsverluste durch den Einbau der Kulissenscheiben 6. Im Gegensatz zu einer Einhausung des gesamten Luftkondensators durch Schallkulissen ist der Einbau des Schalldämpfers 5 somit nicht mit einem nennenswerten zusätzlichen Druckverlust und einem hierdurch erhöhten Leistungsbedarf der Ventilatoren verbunden.

### Bezugszeichenliste

- 1: Abdampfleitung
- 2: Abschnitt
- 3: Übergangsabschnitt
- 4: Übergangsabschnitt
- 5: Schalldämpfer
- 6: Kulissenscheibe
- 6a: Lochblech
- 6b: Kopfstück
- 6c: Dämmaterial

## Patentansprüche

1. Vorrichtung zur Schalldämmung des im Bereich der Dampfturbine eines Kraftwerkes erzeugten und über den Dampf und die zum Luftkondensator führende Abdampfleitung ausgetragenen Geräusches,
**dadurch gekennzeichnet,**
daß in die Abdampfleitung (1) ein Schalldämpfer (5) aus korrosionsbeständigem Material eingebaut ist.

2. Vorrichtung nach Anspruch 1, dadurch gekennzeichnet, daß der Schalldämpfer (5) in einem im Leitungsquerschnitt erweiterten Abschnitt (2) der Abdampfleitung (1) angeordnet ist.

3. Vorrichtung nach Anspruch 1 oder 2, dadurch gekennzeichnet, daß der Schalldämpfer (5) durch mindestens eine Reihe parallel und im Abstand zueinander zwischen gegenüberliegenden Leitungswänden verlaufender Kulissenscheiben (6) gebildet ist, die jeweils aus parallel zur Strömungsrichtung des Dampfes verlaufenden Lochblechen (6a) und diese an- und abströmseitig verbindenden Kopfstücken (6b) bestehen und mit Dämmaterial (6c) gefüllt sind.

4. Vorrichtung nach Anspruch 3, dadurch gekennzeichnet, daß die Kopfstücke (6b) ungelocht sind.

5. Vorrichtung nach Anspruch 3 oder 4, dadurch gekennzeichnet, daß die Kulissenscheiben (6) mit Edelstahl-Drahtgewebe als Dämmaterial (6c) gefüllt sind.
